Europäisches Patentamt

European Patent Office

Office européen des brevets

(19)

(11) Publication number: **0 033 890**
**B1**

(12) **EUROPEAN PATENT SPECIFICATION**

(45) Date of publication of patent specification: **27.07.83**

(51) Int. Cl.³: **G 03 B 15/05, H 05 B 41/32**

(21) Application number: **81100563.6**

(22) Date of filing: **27.01.81**

(54) Power source apparatus for an electric flash lamp.

(30) Priority: **07.02.80 JP 13852/80**

(43) Date of publication of application:
**19.08.81 Bulletin 81/33**

(45) Publication of the grant of the patent:
**27.07.83 Bulletin 83/30**

(84) Designated Contracting States:
**AT BE CH DE FR GB IT LI NL SE**

(56) References cited:
**DE - A - 2 505 416**
**DE - A - 2 634 396**

**Patents Abstracts of Japan, Vol. 3, No. 124, 17 October 1979 page 137E144**

(73) Proprietor: **OLYMPUS OPTICAL CO., LTD.**
**43-2, 2-chome, Hatagaya Shibuya-ku**
**Tokyo 151 (JP)**

(72) Inventor: **Tsukaya, Takashi**
**4-22-13, Owada-machi**
**Hachioji-shi Tokyo (JP)**

(74) Representative: **Kempe, Wolfgang, Dr.**
**Postfach 1273**
**D-6800 Mannheim 1 (DE)**

Power source apparatus for an electric flash lamp

The present invention relates to a power source apparatus for an electric flash lamp, provided with a main capacitor for supplying discharge current to the flash lamp, means for rectifying voltage supplied from an AC power source, multiplying the rectified voltage, the multiplied voltage being applied to said main capacitor, switching means having a gate and connected between said voltage multiplying means and said AC power source, and triggering means for gradually lengthening a conductive period of said switching means by triggering it at successively shortening periods of time.

As well known, the power source apparatus for an electric flash lamp is generally of the type using a step-up transformer having a main capacitor connected to the secondary winding thereof. In this type of the power source apparatus, since a charging current flowing at the start of charging the main capacitor with a large capacity is large, the step-up transformer must be of the high load and high voltage withstanding type resulting necessarily in large size and heavy weight.

To cope with this problem, there has been proposed another power source apparatus which employs a voltage multiplying circuit containing capacitors and diodes for charging the main capacitor, in place of the step-up transformer. This proposal is disclosed in Japanese laid open patent publication No. 101318/79 and Japanese laid open utily model publication No. 8635/79, for example. Although the power source apparatus of this proposal can solve the above-mentioned problem, it has the following defects. In the power source apparatus, in order to reduce the charge time of the main capacitor, a charging resistor must be made small. If this is done, it is difficult to limit the surge current at the time of charging. Further, the load for the charging circuit increases and the voltage drop along the power source line is remarkable. In this case, when the power source line has another circuit connected thereto, that another circuit may be adversely influenced.

DE—A 2 634 396 on the other hand discloses a charging circuit, in which AC from a source is rectified to provide a doubled voltage, in which there is disposed between the rectifying circuit and the AC source a triac the switching on of which is controlled, in accordance with the state of charge of one of the two series-connected capacitors, by a circuit which acts to gradually lengthen the conductive period of the triac by triggering it at successively shortening periods of time.

The conductive period of the triac is gradually prolonged by the comparison between the charge voltage of the capacitor and a saw wave. This arrangement does not permit accurately controlling the triac, setting the charge time adapted for the equipment, and controlling the conductive period of the triac regardless of the capacitance of the capacitor.

Accordingly, an object of the present invention is to provide a small and light power source apparatus for an electric flash lamp which can reduce the load for the charging circuit and the surge current at the time of charging and therefore can minimize the voltage drop along the power source line.

Another object of the present invention is to set the charge time adapted for the equipment, i.e. independent of the characteristics of the charge circuit.

According to the present invention, the power source apparatus of the above-mentioned type is characterized in that said triggering means comprise a rectifying circuit connected to said AC power source, a constant voltage circuit connected to said rectifying circuit and a pulse generator for supplying triggering pulses to the gate of said switching means at a progressively earlier point in successive halfcycles of the supply voltage, said pulse generator being connected to said constant voltage circuit.

This invention can be more fully understood from the following detailed description when taken in conjunction with the accompanying drawings, in which:

Fig. 1 is a circuit diagram of a power source apparatus for an electric flash lamp which is an embodiment according to the present invention; and

Fig. 2 is a time-varying waveform of current supplied to a triac at the initial stage of charge, in which hatched portions are currents flowing through the triac.

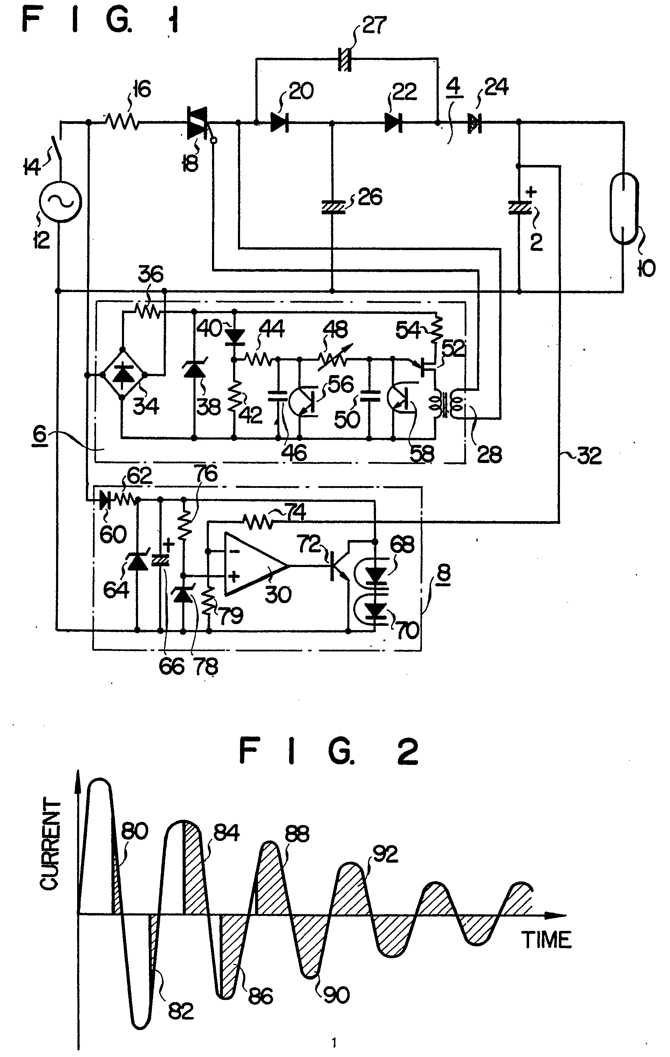

In Fig. 1 illustrating a circuit diagram of a power source apparatus for an electric flash lamp according to the present invention, the power source apparatus is comprised of a charge circuit 4 for charging a main capacitor 2, a soft start circuit 6 for minimizing the load for the charging circuit 4 by restricting the surge current flowing into the charging circuit 4 at the time of charging, and a voltage detecting circuit 8 which detects a charge voltage across the main capacitor 2 and deenergizes the soft start circuit 6 when said charging voltage reaches a predetermined value. In the charging circuit 4, an electric flash lamp 10 is connected in parallel with the charging capacitor 2, as shown, to form a discharge path. For simplicity of illustration, a trigger circuit for triggering the electric flash lamp 10 is omitted.

In the charge circuit 4, a power source switch 14 connected to an AC power source 12 is connected in series to a resistor 16 and a triac 18 which controls the AC power supplied. The triac 18 is connected to a voltage multiplying circuit which is a voltage tripler circuit in the present embodiment. Connected between the triac 18 and the plus end of the capacitor 2 is a series circuit including first, second, and third diode 20, 22 and 24, which are all forwardly poled. A first capacitor 26 is connected between the cathode of the first diode 20 and the minus end of the main capacitor 2 connected to the AC power source 12. A second capacitor 27 is inserted between the anode of the first diode 20 and the cathode of the second diode 22. In the present embodiment according to the invention, the secondary winding of a pulse transformer 28 provided in the soft start circuit 6 for controlling the conductive angle of the triac 18 is connected between the gate of the triac 18 and the anode of the first diode 20. The plus end of the charging capacitor 2 is electrically connected through a voltage detecting line 32 to a comparator 30 provided in the voltage detecting circuit 8 for detecting the charging voltage across the capacitor 2.

In the soft start circuit 6, input terminals of a diode bridge or a full-wave rectifying circuit 34 are connected to the AC power source 12 and its output terminals are connected to a Zener diode 38 for constant voltage via a resistor 36. The Zener diode 38 is connected in parallel with a series circuit containing a diode 40 and a resistor 42. The resistor 42 is connected in parallel with a series circuit containing a resistor 44 and a first capacitor 46 charged through the resistor 44 and the diode 40. The capacitor 46 is connected across a series circuit which contains a variable resistor 48 and a second capacitor 50 charged through a path having the diode 40, the resistor 44 and the variable resistor 48. The plus end of the second capacitor 50 is connected to the emitter of a unijunction transistor (UJT) 52. Incidentally, the UJT 52 may be substituted by a programmable unijunction transistor (PUT). The first base of the UJT 52 is connected to the anode of the Zener diode 38 through the primary winding of the pulse transformer 28, while the second base is connected to the cathode of the Zener diode 38 by way of a resistor 54. First and second photo transistors 56 and 58 of photo-couplers are coupled in parallel with the first and second capacitors 46 and 50, respectively, in order to discharge the capacitors 46 and 50 when the charge capacitor 2 in the charging circuit 4 reaches a predetermined voltage.

In the voltage detecting circuit 8, the AC power source 12 is connected in parallel with a Zener diode 64 through the power source switch 14, a diode 60 and a resistor 62 for providing a constant voltage. The Zener diode 64 is connected across a capacitor 66. The Zener diode 64 also is coupled in parallel with a series circuit having first and second light emitting diodes 68 and 70 of the photo-couplers. The series circuit of the photo diodes is connected across a collector-emitter path of a transistor 72. The base of the transistor 72 is connected to the output terminal of the comparator 30 for energizing the transistor 72. The plus input terminal of the comparator 30 is connected to the junction point between a resistor 76 and a Zener diode 78, which form a series circuit connected in parallel with the Zener diode 64, for supplying a reference voltage to the comparator 30. The minus input terminal of the comparator 30 is connected to a resistor 74 connected to a voltage detecting line 32 and to the anode of the Zener diode 64 through a resistor 79.

With the above-mentioned construction, the power source apparatus for the electric flash lamp according to the invention will operate in the following manner.

When the power source switch 14 is turned on, electric power is supplied from the AC power source 12 to the charge circuit 4, the soft start circuit 6 and the voltage detecting circuit 8. Since no triggering voltage is applied to the gate of the triac 18 at the time of turning on the power source switch 14, the triac 18 is in OFF condition and therefore no charge current is supplied to the charge capacitor 2 of the charge circuit 4. Although the power is supplied to the soft start circuit 6, the UJT 52 is not immediately turned on. Therefore, no output pulse to be supplied to the gate of the triac 18 is developed in the secondary winding of the pulse transformer 28. The voltage supplied from the power source is full-wave rectified by the diode bride 34 and is clipped by the Zener diode 38 at about 24 V, for example. The clipped voltage is applied through the resistor 54 to the UJT 52. However, the charging voltage of the capacitor 50 is low at the start of charging. Therefore the UJT 52 remains OFF. Upon the turning-on of the power source switch 14, the charging of the first capacitor 46 starts through the diode 40 and the resistor 44 and the charging of the second capacitor 50 starts through the variable resistor 48. Before the first half cycle of the full-wave rectified voltage from the diode bridge 34 is terminated, the second capacitor 50 is charged to a predetermined voltage so that the UJT 52 is temporarily turned on. Therefore, the charge in the second capacitor 50 is discharged through the emitter-base path of the UJT 52 and the primary winding of the pulse transformer 28. As a result, an output triggering pulse is produced in the secondary winding of the pulse transformer 28 and the triac 18 is temporarily turned on, so that the charge current as designated by reference numeral 80 in Fig. 2 is supplied to the main capacitor 2 through the voltage multiplying circuit. In the next half cycle of the full-wave rectified voltage, the second capacitor 50 is charged again through the combination of the diode 40, the resistor 44 and the variable resistor 48, while at the same time a charging current is supplied from the first capacitor 46 through the variable resistor 48 to the second capacitor 50. Therefore, the second capacitor 44 is charged to the predetermined voltage faster than in the first half cycle. As a result, the UJT 52 is kept ON for a longer period of time in the second half cycle and the charging current as indicated by numeral 82 in Fig. 2 is supplied to the charge circuit 4. In the succeeding cycle of the current, the charge voltage across the first capacitor 46 gradually grows and the charging time of the second capacitor 50 shortens. As a result, the UJT 52 is turned on earlier. The earlier turn on makes the phase at which the triac 18 is triggered advance, so that the triac 18 is energized at successively shortening time intervals after the start of the half-cycles. The ON state duration in each half cycle gradually increases as indicated by numerals 84 to 90 in Fig. 2 and finally the steady state charge current is supplied to the main capacitor 2.

As seen from the foregoing description, in the initial stage of charging, the conductive angle of the triac 18 is restricted. Because of this, it is possible to restrict surge current from flowing into the charge circuit 4. In the above-mentioned charging process, when the charge voltage of the main capacitor 2 is boosted to the predetermined voltage, for example 330 V, the voltage detecting circuit 8 operates to deenergize the soft start circuit 6. Thus the plus input terminal of the comparator 30 is kept at the reference potential by the Zener diode 78 and the resistor 76, while the minus input terminal is kept at a voltage which is proportional to the voltage across the main capacitor 2. Until the voltage across the capacitor 2 has reached the predetermined voltage, the voltage at the minus terminal of the comparator 30 is lower than that at the plus input terminal. Accordingly, the potential at the output terminal of the comparator 30 is kept at high level and the transistor 72 is left in ON state. Under these conditions the rectified current supplied to the series circuit of the first and second light emitting diodes 68 and 70 is bypassed by the transistor 72, so that these diodes 68 and 70 are kept deenergized. On the other hand, when the charge voltage across the main capacitor 2 reaches the predetermined voltage, the voltage at the minus input terminal of the comparator 30 is higher than the reference voltage at the plus input terminal, so that the level of the output voltage shifts to a low level. Therefore, the transistor 72 is turned off, so that the current is fed to the first and second light emitting diodes 68 and 70 and the phototransistors 56 and 58 are turned on. As a result, the first and second capacitors 46 and 50 are shorted by the phototransistors 56 and 58, respectively, to fully discharge the capacitors 56 and 58. Since this condition continues so long as the charge voltage across the main capacitor 2 does not drop, the UJT 52 will not oscillate and therefore the triac 18 is also kept OFF. As a result, no charge current is supplied to the charge circuit 4.

As described above, since the power source apparatus according to the present invention does not include a step-up transformer, it is possible to reduce the size and weight of the power source apparatus. Additionally, since the surge current in the initial stages of the charging process is limited, the load for the charging circuit may be reduced and the voltage drop along the power source line may be prevented. As a consequence, it is possible to prevent the voltage drop from adversely influencing the related circuits.

## Claims

1. A power source apparatus for an electric flash lamp, provided with a main capacitor (2) for supplying discharge current to the flash lamp (10), means (4) for rectifying voltage supplied from an AC power source (12), multiplying the rectified voltage, the multiplied voltage being applied to said main capacitor (2), switching means (18) having a gate and connected between said voltage multiplying means (4) and said AC power source, and triggering means (6) for gradually lengthening a conductive period of said switching means (18) by triggering it at successively shortening periods of time, characterized in that said triggering means (6) comprise a rectifying circuit (34) connected to said AC power source (12), a constant voltage circuit (38, 40, 42) connected to said rectifying circuit (34) and, a pulse generator (28, 44, 46, 48, 50, 52) for supplying triggering pulses to the gate of said switching means (18) at a progressively earlier point in successive halfcycles of the supply voltage, said pulse generator (28, 44, 46, 48, 50, 52) being connected to said constant voltage circuit (38, 40, 42).

2. A power source apparatus according to claim 1, wherein said triggering means (6) comprise a pulse transformer (28) with a secondary winding connected to the gate electrode of said switching means (18).

3. A power source apparatus according to claim 2, wherein said pulse generator (28, 44, 46, 48, 50, 52) includes a UJT (52) connected to the primary of the pulse transformer (28), a first capacitor (50) connected across the emitter-base path of said UJT (52), and a second capacitor (46) connected in parallel with said first capacitor through a resistor (48) and across the constant voltage circuit (38, 40, 42).

4. A power source apparatus according to claim 1, further comprising voltage detecting means (8) which detects the charge voltage across said main capacitor (2) and renders said triggering means (6) inoperative when the charge voltage reaches a predetermined value, to maintain the switching means (18) in the off state.

5. A power source apparatus according to claim 4, wherein said voltage detecting means (8) includes a comparator (30) with input terminals which, respectively, are connected to said main capacitor (2) and a reference voltage, a switching element (72) operable dependent on the output of said comparator (30), and first and second switching elements (56, 58, 68, 70) which may shortcircuit said first and second capacitors (46, 50) in response to the state of said switching element (72).

**Patentansprüche**

1. Stromversorgungsgerät für eine elektrische Blitzlampe mit einem Hauptkondensator (2) zur Versorgung der Blitzlampe (10) mit dem Entladestrom, einer von einer Wechselstromquelle (12) gespeisten Spannungsgleichrichteranordnung (4), einem Vervielfacher für die gleichgerichtete Spannung, dessen vervielfachte Spannung dem Hauptkondensator (2) zugeführt wird, einer Schaltvorrichtung (18) mit einer Steuerelektrode zwischen dem Spannungsvervielfacher und der Wechselstromquelle (12) und einer Triggervorrichtung (6) zum stufenweisen Verlängern der stromleitenden Periode der Schaltvorrichtung (18) durch Triggern in jeweils kürzeren aufeinanderfolgenden Zeitabständen, dadurch gekennzeichnet, daß die Triggervorrichtung (6) einen mit der Wechselspannungsquelle (12) verbundenen Gleichrichterkreis (34), einen mit dem Gleichrichterkreis (34) verbundenen Spannungskonstanthalter (38, 40, 42) und einen Impulsgeneratur (28, 44, 46, 48, 50, 52) zur Erzeugung von Triggerimpulsen, die der Steuerelektrode der Schaltvorrichtung (18) zu einem fortschreitend früheren Zeitpunkt in aufeinanderfolgenden Halbzyklen der Betriebsspannung zuführbar sind, aufweist, wobei der Impulsgenerator (28, 44, 46, 48, 50, 52) mit dem Spannungskonstanthalter (38, 40, 42) verbunden ist.

2. Stromversorgungsgerät nach Anspruch 1, dadurch gekennzeichnet, daß die Triggervorrichtung (6) einen Impulstransformator (28) aufweist, dessen Sekundärwicklung mit der Steuerelektrode der Schaltvorrichtung verbunden ist.

3. Stromversorgungsgerät nach Anspruch 2, dadurch gekennzeichnet, daß der Impulsgenerator (28, 44, 46, 48, 50, 52) einen Unijunctionstransistor (52), der mit der Primärwicklung des Impulstransformators (28) verbunden ist, einen ersten Kondensator (50), der mit der Emitter-Basis-Strecke der Unijunctions-Transistor (52) verbunden ist, und einen zweiten Kondensator (46) der über einen Widerstand (48) parallel zu dem ersten Kondensator (50) und über dem Spannungskonstanthalter (38, 40, 42) liegt, aufweist.

4. Stromversorgungsgerät nach Anspruch 1, dadurch gekennzeichnet, daß ferner eine Spannungsüberwachungsvorrichtung (8) vorgesehen ist, die die Ladespannung des Hauptkondensators (2) überwacht und die Triggervorrichtung (6) inaktiv hält, wenn die Ladespannung einen vorbestimmten Wert erreicht, der die Schaltvorrichtung im abgeschalteten Zustand beläßt.

5. Stromversorgungsgerät nach Anspruch 4, dadurch gekennzeichnet, daß die Spannungsüberwachungsvorrichtung (8), einen Komparator (30), dessen Eingangsklemmen mit dem Hauptkondensator (2) beziehungsweise mit einer Referenzspannung verbunden sind, ein Schaltelement (72), das in Abhängigkeit von Ausgang des Komparators (30) arbeitet, und ein erstes und ein zweites Schaltelement (56, 58, 68, 70), die den ersten und zweiten Kondensator (46, 50) in Abhängigkeit von der Schaltstellung des Schaltelementes (72) kurzschließen, aufweist.

**Revendications**

1. Un appareil d'alimentation en courant électrique pour une lampe-éclair électrique, muni d'un condensateur principal (2) pour fournir un courant de décharge à la lampe-éclair (10), un moyen (4) pour redresser la tension fournie par une source (12) de courant alternatif, et pour multiplier la tension redressée, la tension redressée étant appliquée audit condensateur principal (2), un moyen de commutation (18) comportant une électrode de commande et monté entre ledit moyen (4) de multiplication de tension et ladite source de courant alternatif, et un moyen de déclenchement (6) pour augmenter progressivement la période de conduction dudit moyen de commutation (18) en le déclenchant pendant des périodes de temps diminuant successivement, caractérisé par le fait que ledit moyen de déclenchement (6) comprend un circuit redresseur (34) relié à ladite source (12) de courant alternatif, un circuit (38, 40, 42) à tension constante relié audit circuit redresseur (34) et un générateur (28, 44, 46, 48, 50, 52) d'impulsions pour fournir des impulsions de déclenchement à l'électrode de commande dudit moyen de commutation (18) à un moment progressivement plus tôt dans les demi-périodes successives de la tension d'alimentation, ledit générateur (28, 44, 46, 48, 50, 52) d'impulsions étant relié audit circuit (38, 40, 42) à tension constante.

2. Appareil d'alimentation en courant électrique selon la revendication 1, dans lequel ledit moyen de déclenchement (6) comprend un transformateur (28) d'impulsions comportant un enroulement secondaire relié à l'électrode de commande dudit moyen de commutation (18).

3. Appareil d'alimentation en courant électrique selon la revendication 2, dans lequel ledit générateur (28, 44, 46, 48, 50, 52) d'impulsions comprend un UJT (52) relié au primaire du transformateur (28) d'impulsions, un premier condensateur (50) monté entre la base et l'émetteur dudit UJT (52) et un second condensateur (46) monté en parallèle avec ledit premier condensateur à travers une résistance (48) et aux bornes du circuit (38, 40, 42) à tension constante.

4. Un appareil d'alimentation en courant selon la revendication 1, comprenant en outre un moyen (8) de détection de tension qui détecte la tension de charge aux bornes dudit condensateur principal (2) et met hors fonction ledit moyen de déclenchement (6) lorsque la tension de charge atteint une valeur prédéterminée de manière à maintenir le moyen de commutation (18) dans l'état non-conducteur.

5. Appareil d'alimentation en courant suivant la revendication 4, dans lequel ledit moyen (8) de détection de tension comprend un comparateur (30) muni de bornes d'entrée qui, respectivement, sont reliées audit condensateur principal (2) et à une tension de référence, un élément de commutation (72) pouvant être actionné en fonction de la sortie dudit comparateur (30), et des premier et second éléments de commutation (6, 58, 68, 70) qui peuvent court-circuiter lesdits premier et second condensateurs (46, 50) en réponse à l'état dudit élément de commutation (72).

0 033 890

F I G. 1

F I G. 2